# EUROPEAN PATENT SPECIFICATION

(11) **EP 3 064 734 B1**
(45) Date of publication and mention of the grant of the patent: **29.07.2020**
(21) Application number: 14857262.1
(22) Date of filing: 03.10.2014
(51) Int. Cl.: F01P 3/12, F01D 15/10, F01K 23/02, F01P 3/20, F01P 9/02

(54) **ENGINE COOLING SYSTEM**
MOTORKÜHLUNGSSYSTEM
SYSTÈME DE REFROIDISSEMENT DE MOTEUR

(30) Priority: 30.10.2013 JP 2013225547
(43) Date of publication of application: 07.09.2016
(73) Proprietor: Isuzu Motors Limited, Tokyo 140-8722 (JP)
(72) Inventor: HONDA,Taku, Fujisawa-shi Kanagawa 252-0881 (JP)
(74) Representative: WSL Patentanwälte Partnerschaft mbB
(86) International application number: PCT/JP2014/076556
(87) International publication number: WO 2015/064302

(56) References cited:
- EP-A2- 2 578 817
- WO-A1-2011/149409
- JP-A- S5 888 409
- JP-A- 2008 008 224
- JP-A- 2008 255 923
- JP-A- 2013 083 240

## Description

### TECHNICAL FIELD

The present invention relates to an engine cooling system, and more specifically relates to an engine cooling system including a Rankine cycle with an improved performance while suppressing an increase in vehicle weight caused by employing the Rankine cycle.

### BACKGROUND ART

Conventionally, there has been a proposal to employ a Rankine cycle in a vehicle in order to recover waste heat from an engine and thereby improve the fuel economy, as described in, for example, Japanese patent application Kokai publication No. 11-51582 (Patent Literature 1). For example, engine-main-body cooling water heated by an engine main body is used as a heating source of a Rankine cycle while intercooler cooling water cooled by a sub-radiator is used as a cooling source, so that a temperature difference between these flows of cooling water can be recovered as a power energy in a compressor (turbine).

However, when such a Rankine cycle is employed on a vehicle, the vehicle weight is increased. This may counterbalance the effect of improving the fuel economy.

Moreover, since the temperature of the engine-main-body cooling water is merely around 100°C, it is only possible to obtain a relatively small temperature difference between the flows of cooling water. Hence, it is difficult to have the Rankine cycle exhibit a sufficient performance to further improve the fuel economy. Document WO 2011/149409 A1 shows another implementation of a Rankine cycle on a vehicle.

### PRIOR ART DOCUMENT

### PATENT DOCUMENT

Patent Document 1: Japanese patent application Kokai publication No. 11-51582

### SUMMARY OF THE INVENTION

### PROBLEM TO BE SOLVED BY THE INVENTION

An object of the present invention is to provide an engine cooling system capable of suppressing an increase in vehicle weight caused by employing a Rankine cycle and capable of improving the Rankine cycle performance.

### MEANS FOR SOLVING THE PROBLEM

In order to achieve the above object, an engine cooling system of the present invention is an engine cooling system according to claim 1.

### EFFECTS OF THE INVENTION

According to the engine cooling system of the present invention, the heating source used for the evaporator in the Rankine cycle is compressed air having a higher temperature than that of conventional engine-main-body cooling water. This makes it possible to improve the performance of the Rankine cycle, thereby improving the fuel economy.

Moreover, since compressed air is cooled using the evaporator of the Rankine cycle, this eliminates the need for an existing intercooler. Hence, it is possible to suppress an increase in vehicle weight.

### BRIEF DESCRIPTION OF THE DRAWING

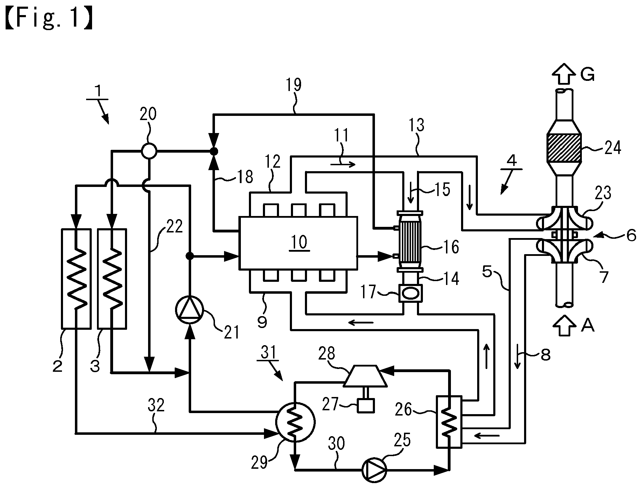

[Fig. 1] Fig. 1 is a configuration diagram of an engine cooling system according to an embodiment of the present invention.

### MODES FOR CARRYING OUT THE INVENTION

Hereinafter an embodiment of the present invention will be described with reference to the drawing. Fig. 1 shows an engine cooling system according to the embodiment of the present invention.

This engine cooling system includes a sub-radiator 2 and a radiator 3 disposed in this order from a front surface of a vehicle 1. The sub-radiator 2 and the radiator 3 are configured to perform air-cooling by utilizing vehicle-speed wind and cooling wind of a cooling fan (not shown) when the vehicle 1 is running or idling.

In a diesel engine 4, which is a cooling target of the engine cooling system, air A is drawn to an intake passage 5, passes through an air cleaner not shown, and is compressed by a compressor 7 of a turbocharger 6. Then, compressed air 8 thus obtained is supplied to an engine main body 10 via an intake manifold 9.

The compressed air 8 supplied to the engine main body 10 is mixed with a fuel and burned, thereby generating a thermal energy. Then, a burned gas 11 thus obtained is discharged from an exhaust manifold 12 to an exhaust passage 13. Some of the burned gas 11 is diverted as an EGR gas 15 into an EGR passage 14, which is located in front of the intake manifold 9 and connected to the intake passage 5. To the EGR passage 14, a water-cooled EGR cooler 16 and an EGR valve 17 configured to adjust a flow amount of the EGR gas 15 are disposed in this order from the exhaust passage 13 side.

Flow amounts of engine-main-body cooling water 18 for cooling the engine main body 10 and EGR-cooler cooling water 19 used for cooling in the EGR cooler 15 are regulated by a thermostat 20. The engine-main-body cooling water 10 and the EGR-cooler cooling water 19 are forced to circulate between the radiator 3 and corresponding one of the engine main body 10 and the EGR cooler 15 by the water pump 13.

On the other hand, cooling water 22 diverted from the thermostat 19 during warming-up time of the engine main body 10 circulates without passing through the radiator 3. Note that some of the engine-main-body cooling water 18 normally flows as the EGR-cooler cooling water 19.

A portion of the burned gas 11 which is not diverted to the EGR passage 15 is released as an exhaust gas G into the atmosphere after an exhaust gas purification device 24 including DPF, SCR, and the like purifies harmful substances by driving the rotation of a turbine 23 of the turbocharger 6.

The engine cooling system as described above is provided with a Rankine cycle 31 configured such that a coolant 30 circulates through a cooling pump 25, an evaporator 26, an expander 28 linked to an electric power generator 27, and a condenser 29 in this order.

A cooling side of the condenser 29 in this Rankine cycle 31 links an inlet side of the water pump 21 to an outlet side of the sub-radiator 2. Outlet-side cooling water 32 of the sub-radiator 2 (some of the engine-main-body cooling water 18 and the EGR-cooler cooling water 19 after cooling) flows into the cooling side.

Moreover, a heating side of the evaporator 26 of the Rankine cycle 31 is arranged in the intake passage 5 between the compressor 7 and the EGR passage 14. The compressed air 8 compressed to high temperature (for example, approximately 160°C) by the compressor 7 flows to the heating side.

The coolant 30 which circulates through the Rankine cycle 31 is compressed by the cooling pump 25, and heated at a constant pressure by the high-temperature compressed air 8 in the evaporator 26, so that the coolant 30 is turned into an over-heated vapor at high pressure. While the coolant 30 is subjected to an adiabatic expansion in the expander 28, an electric power is generated by driving the rotation of the electric power generator 27. Then, the coolant 30 is cooled at a constant pressure by the outlet-side cooling water 32 of the sub-radiator 2 in the condenser 29, and is returned to a liquid. The electric power generated by the electric power generator 27 is charged in a battery (not shown) and serves as a power source for electronic parts of the vehicle 1.

As described above, unlike a conventional case, the engine-main-body cooling water 18 is not used as the heating source for the evaporator 26 in the Rankine cycle 31, but the compressed air 8 having a higher temperature is used instead. This makes it possible to improve the power recovering performance of the Rankine cycle 31, thereby improving the fuel economy.

For example, the power generation by an alternator is reduced because of an increased amount of electric power generated in the electric power generator 27 whose rotation is driven by the expander 28 in the Rankine cycle 31. Thus, a load to the engine main body 10 is reduced, improving the fuel economy.

Moreover, since the compressed air 8 is cooled using the evaporator 26 of the Rankine cycle 31, this eliminates the need for an existing intercooler. Hence, it is possible to suppress an increase in vehicle weight.

Note that it is needless to say that the cooling target of the engine cooling system of the present invention is not limited to the diesel engine 4 as described above, and includes a gasoline engine, as well.

### EXPLANATION OF REFERENCE NUMERALS

- 1: vehicle
- 2: sub-radiator
- 3: radiator
- 4: diesel engine
- 8: compressed air
- 10: engine main body
- 18: engine-main-body cooling water
- 25: cooling pump
- 26: evaporator
- 27: electric power generator
- 28: expander
- 29: condenser
- 30: coolant
- 31: Rankine cycle
- 32: outlet-side cooling water (of sub-radiator)

## Claims

1. An engine cooling system comprising:
a Rankine cycle (31) configured such that a coolant (30) circulates through a cooling pump (25), an evaporator (26), an expander (28), and a condenser (29) in this order;
an engine main body (10) in which a supercharger is arranged in an intake passage (5); and
a radiator (3) through which cooling water for the engine main body (10) circulates, wherein
a sub-radiator (2) is installed parallel to the radiator (3),
compressed air (8) compressed by the supercharger is used as a heating source for the evaporator (26), and
outlet-side cooling water (32) of the sub-radiator is used as a cooling source for the condenser (29), **characterized in that** some of the outlet-side cooling water of the radiator having passed through the condenser (29) and returning to the sub-radiator (2).

2. The engine cooling system according to claim 1, wherein the expander (28) is linked to an electric power generator (27).

## Patentansprüche

1. Motorkühlsystem, aufweisend:
einen Rankine-Zyklus (31), welcher so ausgebildet ist, dass ein Kühlmittel (30) durch eine Kühlpumpe (25), einen Verdampfer (26), einen Expander (28) und einen Kondensator (29) in dieser Reihenfolge zirkuliert,
einen Motorhauptkörper (10), in welchem ein Turbolader in einem Einlasskanal (5) angeordnet ist, und
einen Radiator (3), durch welchen Kühlwasser für den Motorhauptkörper (10) zirkuliert, wobei
ein Sub-Radiator (2) parallel zu dem Radiator (3) eingebaut ist,
Druckluft (8), welche durch den Turbolader komprimiert wird, als eine Heizquelle für den Verdampfer (26) verwendet wird, und
Auslassseitenkühlwasser (32) des Sub-Radiators als eine Kühlquelle für den Kondensator (29) verwendet wird, **dadurch gekennzeichnet, dass** ein Teil des Auslassseitenkühlwassers des Radiators sich mit dem Kühlwasser, welches durch den Kondensator (29) hindurchgetreten ist, vermischt und zu dem Sub-Radiator (2) zurückkehrt.

2. Motorkühlsystem nach Anspruch 1, wobei der Expander (28) mit einem elektrischen Stromgenerator (27) verbunden ist.

## Revendications

1. Un système de refroidissement de moteur comprenant:
un cycle de Rankine (31) configuré de telle sorte qu'un agent de refroidissement (30) circule à travers une pompe de refroidissement (25), un évaporateur (26), un détendeur (28), et un condenseur (29) dans cet ordre;
un corps principal de moteur (10) dans lequel un dispositif de suralimentation est agencé dans un conduit d'admission (5); et
un radiateur (3) à travers lequel de l'eau de refroidissement pour le corps principal de moteur (10) circule, où
un sous-radiateur (2) est installé parallèlement au radiateur (3),
de l'air comprimé (8) comprimé par le dispositif de suralimentation est utilisé comme source de chauffage pour l'évaporateur (26), et
de l'eau de refroidissement côté sortie (32) du sous-radiateur est utilisée comme source de refroidissement pour le condenseur (29), **caractérisé en ce qu'**une partie de l'eau de refroidissement côté sortie du radiateur se mêle à l'eau de refroidissement qui est passée à travers le condenseur (29) et qui revient vers le sous-radiateur (2).

2. Le système de refroidissement de moteur selon la revendication 1, où le détendeur (28) est relié à un générateur de puissance électrique (27).
